# EUROPÄISCHE PATENTANMELDUNG

(11) **EP 2 067 695 A1**
(43) Veröffentlichungstag der Anmeldung: **10.06.2009**
(21) Anmeldenummer: 08003401.0
(22) Anmeldetag: 25.02.2008
(51) Int. Cl.: B63B 59/00, B63C 11/52, G01B 11/00

(54) **System und Verfahren zum Untersuchen und/oder zum Bestimmen der Beschaffenheit oder des Zustandes eines Schiffsrumpfes**

(30) Priorität: 07.12.2007 DE 202007017116 U
(71) Anmelder: Becker Marine Systems GmbH & Co. KG, 20179 Hamburg (DE)
(72) Erfinder: Lehmann, Dirk, 21423 Winsen (Luhe) (DE)
(74) Vertreter: Richter, Werdermann, Gerbaulet & Hofmann

(57) **Zusammenfassung**

Um ein System (100; 100') sowie ein Verfahren zum Untersuchen und/oder zum Bestimmen der Beschaffenheit oder des Zustandes eines Schiffsrumpfes (10), insbesondere dessen Außenhaut (12), bereit zu stellen, durch die es ermöglicht wird, die Dockintervallzeit für Schiffe in Abhängigkeit von der Beschaffenheit oder vom Zustand des Schiffsrumpfes (10) zu wählen, insbesondere zu verlängern, wird vorgeschlagen, dass die Außenhaut (12), insbesondere mittels mindestens eines Gitter- oder Netzwerkes (14), das eine Unterteilung aufweist, die funktional mit mindestens einer schwimm-/tauchfähigen Untersuchungs-/Bestimmungseinheit (20; 20') zum Untersuchen und/oder zum Bestimmen der Beschaffenheit oder des Zustandes des Schiffsrumpfes (10) zusammenwirkt.

## Beschreibung

### Technisches Gebiet

Die vorliegende Erfindung betrifft ein System sowie ein Verfahren zum Untersuchen und/oder zum Bestimmen der Beschaffenheit oder des Zustandes eines Schiffsrumpfes.

### Stand der Technik

Für Schiffe ist ein bestimmter Zeitraum (z. B. fünf Jahre) vorgegeben, nach dessen Ablauf die Schiffe zum Zwecke des Anstriches, der Inspektion, der Reparatur, der Überholung, der Wartung o. dgl. in das Dock müssen.

Ein derartiges obligatorisches Eindocken von Schiffen nach Ablauf eines fest vorgegebenen Zeitraumes ist mit hohen Kosten für den Reeder verbunden. Gerade aus derartigen wirtschaftlichen Gründen liegt es im Interesse der Reeder, diese Zeiträume - wenn möglich - zu verlängern, d. h. von einer Feststellung des Zustandes des Schiffes abhängig zu machen.

Die Möglichkeit eines von individuellen Gegebenheiten abhängigen Eindockens wäre auch vor dem Hintergrund wünschenswert, dass die mit Schiffen zu befahrenden Wasser variable Härte- und Verunreinigungsgrade aufweisen sowie unterschiedlich aggressiv sind und demzufolge den Schiffen, insbesondere den Schiffsrümpfen, in unterschiedlicher intensiver Weise zusetzen, so dass ein fest vorgegebenes Anstrichs-, Inspektions-, Reparatur-, Überholungs- oder Wartungsintervall der tatsächlichen Beschaffenheit oder dem tatsächlichen Zustand eines Schiffsrumpfes im Regelfall nicht gerecht wird.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein System sowie ein Verfahren der eingangs genannten Art bereit zu stellen, durch die es ermöglicht wird, die Dockintervallzeit für Schiffe in Abhängigkeit von der Beschaffenheit oder vom Zustand des Schiffsrumpfes zu wählen, insbesondere zu verlängern.

Diese Aufgabe wird durch ein System mit den im Anspruch 1 angegebenen Merkmalen sowie durch ein Verfahren mit den im Anspruch 14 angegebenen Merkmalen gelöst.

Vorteilhafte Ausgestaltungen und zweckmäßige Weiterbildungen der vorliegenden Erfindung sind in den jeweiligen Unteransprüchen gekennzeichnet.

Um die Zeit oder das Zeitintervall festzulegen, nach der bzw. nach dem ein Schiff, wie etwa ein Kreuzfahrtschiff, ein Lastschiff oder ein Tankschiff, zum Zwecke des Anstriches, der Inspektion, der Reparatur, der Überholung, der Wartung o. dgl. in das Dock zu verbringen ist, sieht die vorliegende Erfindung ein System sowie ein Verfahren für die, insbesondere automatische, Untersuchung, Bestimmung und/oder Messung der Rumpfbeschaffenheit oder des Rumpfzustandes mittels einer schwimm-/tauchfähigen Untersuchungs-/Bestimmungs-/Messeinheit, insbesondere eines in Form einer schwimmenden Messstation ausgebildeten Unterwasserfahrzeuges, vor.

So sieht die Erfindung ein System zum Untersuchen und/oder zum Bestimmen der Beschaffenheit oder des Zustandes eines Schiffsrumpfes, insbesondere dessen Außenhaut vor, wobei das System ein Gitter- oder Netzwerk mit einer planquadratischen Unterteilung oder mit einzelnen Einheiten umfasst, das funktional mit mindestens einer schwimm-/tauchfähigen Untersuchungs-/Bestimmungs-/Messeinheit zum Untersuchen und/oder zum Bestimmen der Beschaffenheit oder des Zustandes der Außenhaut des Schiffsrumpfes zusammenwirkt.

Das Gitter- oder Netzwerk ist in einzelne Einheiten unterteilt, die als gleichförmige, quadratische, rechteckförmige oder eine andere geometrische Form aufweisenden Flächengestaltungen ausgebildet sind.

Die Einheiten sind mit mindestens einem Ordnungsmittel oder Zuordnungsmittel wie Buchstaben, Zahlen oder Buchstaben-/Zahlenkombinationen versehen.

Des Weiteren ist das Gitter- oder Netzwerk mit seinen einzelnen Einheiten und mit den Ordnungsmitteln oder Zuordnungsmitteln vermittels der Untersuchungs-/Bestimmungseinheit abtastbar, optisch erkennbar oder elektronisch erfassbar und in Messwerte umwandelbar.

Nach einer ersten Ausführungsform ist die Außenhaut des Schiffsrumpfes mit dem Gitter- oder Netzwerk versehen. Dabei ist die Unterteilung der Außenhaut
- durch Farbanbringung oder
- durch, insbesondere unter der Farbe der Außenhaut angebrachte ortbare Farbstreifen
realisiert.

Eine zweite Ausführungsform sieht vor, dass das Gitter- oder Netzwerk in einer Messoptik der Untersuchungs-/Bestimmungs-/Messeinheit angeordnet ist.

Eine dritte Ausführungsform sieht vor, dass das Gitter- oder Netzwerk visuell zwischen dem Schiffsrumpf und der Untersuchungs-/Bestimmungs-/Messeinheit aufgebaut wird.

Besonders vorteilhaft ist, wenn das Gitter- oder Netzwerk in den von der Untersuchungs-/Bestimmungs-/Messeinheit auf den Schiffsrumpf gesandten Messstrahl eingeblendet wird.

Alternativ zu einer Ausgestaltung als bemanntes und/oder funk- oder manuell steuerbares Unterwasserfahrzeug, insbesondere Unterseeboot oder U-Boot, kann die Untersuchungs-/Bestimmungseinheit auch als
- entlang dem zu untersuchenden Schiffsrumpf und/oder
- beabstandet, insbesondere gleichmäßig beabstandet, zum zu untersuchenden Schiffsrumpf
verfahrbares Modul ausgebildet sein.

Unabhängig von der konkreten Ausgestaltung der schwimm-/tauchfähigen Untersuchungs-/Bestimmungseinheit wirkt erfindungsgemäß eine spezielle Schiffshautausgestaltung funktional, insbesondere elektronisch funktional, mit der schwimm-/tauchfähigen Untersuchungs-/Bestimmungseinheit zusammen.

Zum Zwecke dieses Zusammenwirkens ist die Untersuchungs/Bestimmungseinheit in bevorzugter Weise mit Untersuchungs-/Bestimmungsmitteln zum Untersuchen und/oder zum Bestimmen, insbesondere zum Messen, z. B. zum lichtoptischen, photographischen oder visuellen Erfassen, der Beschaffenheit oder des Zustandes, z. B. der Farbschichtdicke und/oder der Rauheit, des Schiffsrumpfes, insbesondere der Oberfläche der Außenhaut des Schiffsrumpfes, ausgerüstet.

Diese Untersuchungs-/Bestimmungsmittel oder Messeinrichtungen sind als
- mindestens eine Einrichtung zum Orten einzelner Einheiten am Schiffsrumpf und/oder als
- mindestens eine Einrichtung zum Abtasten der Oberfläche der Schiffsaußenhaut in den einzelnen Einheiten und/oder als
- mindestens eine Einrichtung zum Messen der Schichtdicke der Farbe auf der Schiffsaußenhaut und/oder der Rauheit der Außenhaut
ausgebildet.

Die Erfindung betrifft des Weiteren ein Verfahren zum Untersuchen und/oder zum Bestimmen der Beschaffenheit oder des Zustandes eines Schiffsrumpfes bzw. dessen Außenhaut, insbesondere mittels mindestens eines Gitter- oder Netzwerkes, das mit einer Unterteilung versehen wird, wobei die Unterteilung funktional mit mindestens einer schwimm-/tauchfähigen Untersuchungs-/Bestimmungs-/Messeinheit zum Untersuchen und/oder zum Bestimmen der Beschaffenheit oder des Zustandes des Schiffsrumpfes bzw. dessen Außenhaut zusammenwirkt.

Ein weiteres Verfahren zum Untersuchen und/oder zum Bestimmen der Beschaffenheit oder des Zustandes eines Schiffsrumpfes bzw. dessen Außenhaut besteht darin, dass von einem parallel zu dem zu prüfenden Schiffes verfahrbare schwimm-/tauchfähige Untersuchungs-/Bestimmungs-/Messeinheit auf die Außenhaut des Schiffsrumpfes ein sich abschnittsweise oder gänzlich über die Schiffsaußenwand erstreckendes visuelles Gitter- oder Netzwerk mit einer planquadratischen Unterteilung oder einzelnen Einheiten mit Ordnungsmitteln oder Zuordnungsmitteln in Form von Buchstaben, Zahlen oder von Buchstaben-/Zahlenkombinationen, als bildliche Präsentation und Sichtbarmachung aufgebaut und auf die Außenhaut gerichtet wird, so dass die die einzelnen Unterteilungen oder Einheiten entsprechenden Flächen oder Abschnitte der Außenhaut zugeordnet werden, über die die Beschaffenheit oder der Zustand des Schiffsrumpfes oder dessen Außenhaut durch lichtoptisches, photographisches oder visuelles Erfassen überprüft wird.

Außerdem sieht das Verfahren vor, dass mittels der Untersuchungs-/Bestimmungs-/Messeinheit erhaltene Messwerte ausgewertet werden und/oder mit diesen Messwerten der Zeitpunkt errechnet wird, zu dem das Schiff zum Zwecke des Anstriches, der Inspektion, der Reparatur, der Überholung, der Wartung o. dgl. in ein Dock, insbesondere in ein Trockendock, zu verbringen ist.

Die vorliegende Erfindung betrifft schließlich die Verwendung mindestens einer schwimm-/tauchfähigen Untersuchungs-/Bestimmungseinheit, insbesondere mindestens eines Unterwasserfahrzeuges, z. B. mindestens eines Unterseeboots, zum Untersuchen und/oder zum Bestimmen der Beschaffenheit oder des Zustandes des Rumpfes eines Schiffes, z. B. eines Kreuzfahrtschiffes, eines Lastschiffes oder eines Tankschiffes, dessen Außenhaut, insbesondere mittels mindestens eines optisch sichtbaren oder unsichtbaren oder visuellen Gitter- oder Netzwerkes, eine Unterteilung in, z. B. in gleichförmige, Einheiten untersucht wird.

### Kurze Beschreibung der Zeichnungen

Die Erfindung wird anhand von Ausführungsbeispielen in den Zeichnungen näher erläutert. Es zeigen:

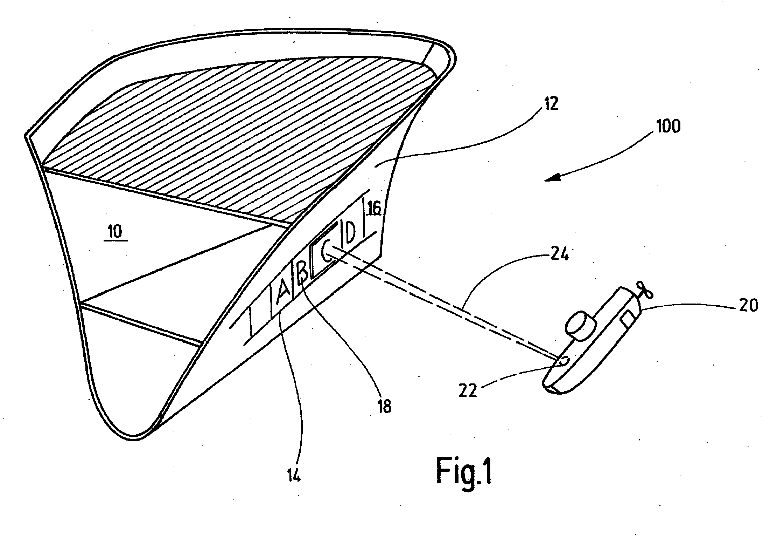

- Fig. 1: in perspektivischer Teilquerschnittansicht ein erstes Ausführungsbeispiel für ein nach dem Verfahren gemäß der vorliegenden Erfindung arbeitendes System gemäß der vorliegenden Erfindung mit Vorschiff, dessen Außenhaut mit einem ein Gitterwerk in Form von Planquadraten aufweisenden Muster versehen ist, in schaubildlicher Ansicht und mit die Messeinrichtungen enthaltendem schwimm-/tauchfähigem Unterwasserfahrzeug,

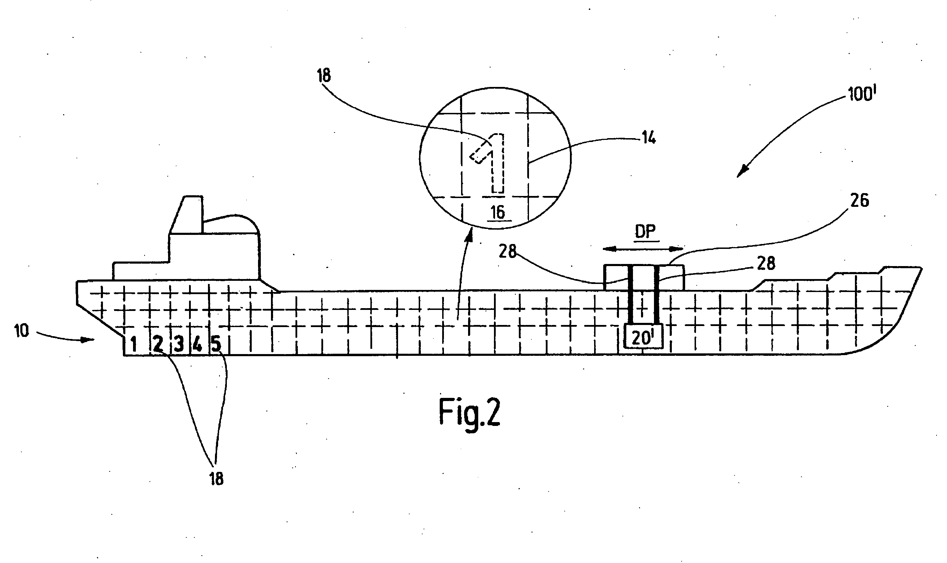

- Fig. 2: in schematischer Seitenansicht ein zweites Ausführungsbeispiel für ein nach dem Verfahren gemäß der vorliegenden Erfindung arbeitendes System gemäß der vorliegenden Erfindung mit entlang dem zu untersuchenden Rumpf eines Schiffes, z. B. eines Kreuzfahrtsschiffes, eines Lastschiffes oder eines Tankschiffes, beabstandet verfahrbarer Untersuchungs-/Bestimmungs-/Messeinheit, wobei die Schiffshaut mit einem ein Gitterwerk in Form von Planquadraten aufweisenden Muster versehen ist, und

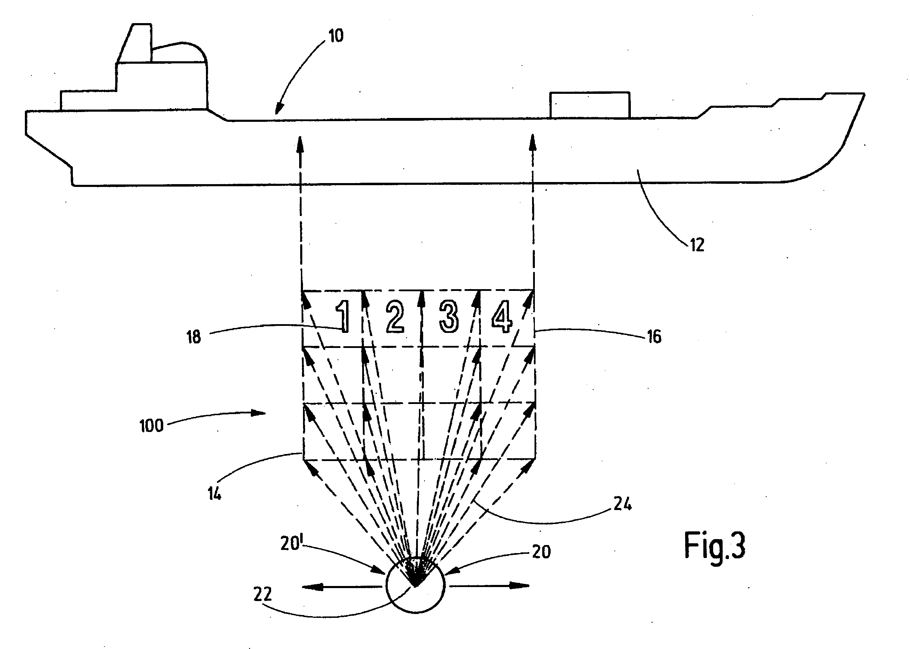

- Fig. 3: in einer schematischen Ansicht ein drittes Ausführungsbeispiel für ein nach dem Verfahren gemäß der vorliegenden Erfindung arbeitendes System mit einer verfahrbaren Untersuchungs-/Bestimmungs-/Messeinheit, wobei mit einem visuell aufgebauten Gitterwerk in Form von Planquadraten die Außenhaut eines Schiffsrumpfes untersucht wird.

### Bester Weg zur Ausführung der vorliegenden Erfindung

Wie der Darstellung gemäß Fig. 1 und gemäß Fig. 2 entnehmbar ist, ist zur Realisierung des erfindungsgemäßen Systems 100, 100' zum automatischen Untersuchen und Bestimmen der Beschaffenheit oder des Zustandes eines Schiffsrumpfes 10 nach einer ersten Ausführungsform die Außenhaut 12 dieses Schiffsrumpfes 10 in einzelne Planquadrate 16 aufgeteilt.

Diese Planquadrate 16 werden durch ein auf die Schiffshaut 12 aufgebrachtes, optisch erfassbares Gitter- bzw. Netzwerk 14 hergestellt, z. B. durch Farbanbringung oder durch unter der Schiffshautfarbe angebrachte Farbstreifen, die mittels einer schwimm-/tauchfähigen Untersuchungs-/Bestimmungseinheit 20 geortet werden können. Auch besteht die Möglichkeit, auf die Schiffsseitenwände ein von außen nicht sichtbares aber ortbares Gitter- bzw. Netzwerk 14 aufzutragen.

Die Planquadratfelder 16 können des Weiteren
- mit abtastbaren Buchstaben A, B, C, D, ... (vgl. erstes Ausführungsbeispiel gemäß Fig. 1) und/oder
- mit abtastbaren Zahlen 1, 2, 3, 4, ... (vgl. zweites Ausführungsbeispiel gemäß Fig. 2, insbesondere die vergrößerte kreisförmige Darstellung in Fig. 2)

als Ordnungs- oder Zuordnungsmittel 18 versehen sein, um ein geordnetes, planmäßiges und sukzessives Untersuchen und Bestimmen der Beschaffenheit oder des Zustandes des Schiffsrumpfes 10 zu gewährleisten.

Der zweite Teil des Systems 100, d. h. die schwimm-/tauchfähige Untersuchungs-/Bestimmungseinheit 20 besteht im ersten Ausführungsbeispiel gemäß Fig. 1 in einem funkgesteuerten oder von Hand gesteuerten bemannten Unterwasserfahrzeug in Form eines als schwimmende Messstation ausgebildeten Unterseebootes 20 oder Schiffes.

Das Unterseeboot 20 ist mit z. B. auf Radar und/oder z. B. auf Ultraschall basierenden Untersuchungs-/Bestimmungsmitteln 22, nämlich
- mit Einrichtungen zum Orten der einzelnen Planquadrate 16 am Schiffsrumpf 10,
- mit Einrichtungen zum Abtasten der Oberfläche der Schiffshaut 12 in den einzelnen Planquadraten 16,
- mit Einrichtungen zum Messen der Schichtdicke der Farbe auf der Schiffshaut 12

u. dgl. versehen, um die Beschaffenheit oder den Zustand der Oberfläche der Schiffshaut 12 zu messen.

Die vermittels des, z. B. auf Radar oder z. B. auf Ultraschall basierenden, Erfassungs-/Messstrahls 24 im Wege der an der Schiffsaußenhaut 12 erfolgenden Reflexion (oder zumindest Teilreflexion) erhaltenen Messwerte werden ausgewertet bzw. mit diesen Messwerten wird der Zeitpunkt errechnet, zu dem das Schiff zum Zwecke des Anstriches, der Inspektion, der Reparatur, der Überholung, der Wartung o. dgl. in das Trockendock muss.

Die Oberflächenbeschaffenheit oder der Oberflächenzustand der Schiffshaut 12 kann visuell erfasst werden; insbesondere werden die Farbschichtdicke auf der Außenhaut 12 und die Rauheit der Außenhaut 12 erfasst. Hierbei sind die Messeinrichtungen so ausgebildet, dass die Oberfläche der Schiffshaut 12 photographisch, lichtoptisch und/oder mittels elektronischer Mittel erfasst werden kann.

Im Rahmen der vorliegenden Erfindung ist es auch denkbar, dass das schwimm-/tauchfähige Unterwasserfahrzeug 20 in Form einer schwimmenden Messstation von einem zweiten Schiff aus startet und von diesem nach abgeschlossener Untersuchung des Schiffsrumpfes 10, z. B. auf Farbschichtdicke und/oder auf Rauheit hin, auch wieder aufgenommen wird.

Das anhand Fig. 2 veranschaulichte zweite Ausführungsbeispiel des Systems 100' basiert grundsätzlich auf dem gleichen Verfahrensprinzip wie das erste Ausführungsbeispiel des Systems 100 gemäß Fig. 1; jedoch ist zum Erfassen der Beschaffenheit und des Zustandes des Schiffsrumpfes 10 in Fig.2 eine schwimm-/tauchfähige Untersuchungs-/Bestimmungseinheit 20' vorgesehen, die entlang dem zu untersuchenden Schiffsrumpf 10 verfahren wird (<--> Bezugszeichen DP).

Hierbei kann die Untersuchungs-/Bestimmungseinheit 20' z. B. an der Reeling des zu untersuchenden Schiffes angeordnet sein; insbesondere kann die Untersuchungs-/Bestimmungseinheit 20' mittels Seilen 28 an der Außenseite 12 des Schiffsrumpfes 10 herab gelassen und nach erfolgter Untersuchung wieder herauf gezogen werden; im Speziellen kann die Untersuchungs-/Bestimmungseinheit 20' z. B. an einer mobilen Aufhängeeinrichtung 26, wie etwa an einer entlang der Schiffsreeling (<--> Bezugszeichen DP) verfahrbaren Stange, angebracht sein.

Auf diese Weise wird ein sukzessives, nämlich entsprechend der Abfolge 1, 2, 3, 4, ... des Ordnungs- oder Zuordnungsmittels 18 erfolgendes Abtasten der Außenhaut 12 des zu untersuchenden Schiffsrumpfes 10 auf Farbschichtdicke und auf Rauheit hin ermöglicht.

In einer Abwandlung des zweiten Ausführungsbeispiels gemäß Fig. 2 ist die Untersuchungs-/Bestimmungseinheit 20' nicht am zu untersuchenden Schiffs selbst, sondern beabstandet, insbesondere gleichmäßig beabstandet, zu diesem an der Reeling eines zweiten Schiffes, insbesondere eines Untersuchungsschiffes, angeordnet.

Durch Verfahrung der Untersuchungs-/Bestimmungseinheit 20' entlang diesem zweiten Schiff ist ein sukzessiv erfolgendes Abtasten der Außenhaut 12 des zu untersuchenden Schiffsrumpfes 10 auf Farbschichtdicke und auf Rauheit hin möglich.

Eine weitere Ausführungsform des erfindungsgemäßen Systems ist in Fig. 3 dargestellt. Bei dieser Ausführungsform weist die Außenhaut 12 des Schiffsrumpfes kein sichtbares oder unsichtbares Gitter- oder Netzwerk in Form einer planquadratisch ausgebildeten Einheit 16 auf.

Um die Zeit oder das Zeitintervall der Eindockzeit eines Schiffes zum Zwecke des Anstriches, der Inspektion, der Reparatur, der Überholung oder der Wartung festlegen zu können, sieht das System eine schwimm-/tauchfähige Untersuchungs-/Bestimmungs-/Messeinheit in Form eines Bootes oder Unterseebootes und ein Gitter- oder Netzwerk 14 vor, das in einer Messoptik der Untersuchungs-/Bestimmungs-/Messeinheit 20, 20' angeordnet oder visuell zwischen dem Schiffsrumpf 10 und der Einheit 20, 20' aufgebaut ist (Fig. 3). So kann das Gitter- oder Netzwerk 14 auch in den von der Einheit 20, 20' auf den Schiffsrumpf 10 gesandten Mess- oder Beobachtungsstrahl eingeblendet werden. Dabei kann die Größe des Gitter- oder Netzwerkes 14 die gesamte Außenhaut 12 des Schiffsrumpfes 10 abdecken aber auch nur Abschnitte der Außenhaut, so dass bei einem Verfahren der Einheit 20, 20' parallel zum Schiffsrumpf 10 durch Mitwandem des Gitter- oder Netzwerkes 12 von diesem ein Abschnitt nach dem anderen Außenhaut erfasst und diese überprüft werden kann, so dass bei einer Addition des gemessenen Abschnittes des Schiffsrumpfes ein komplettes Überwachungsbild des Schiffsrumpfes bzw. dessen Außenhaut 12 erhalten wird. Auch bei dieser Ausführungsform ist das Gitter- bzw. Netzwerk 14 in einzelne ein Planquadrat bildende Einheiten 16 unterteilt, die mit einem Ordnungsmittel oder Zuordnungsmittel 18, wie Buchstaben, Zahlen oder aus Buchstaben und Zahlen gebildete Kombinationen versehen sind. Die Verwendung eines visuell eingeblendeten Gitter- oder Netzwerkes 14 bzw. die Handhabung eines visuellen Gitter- oder Netzwerkes 14 hat den Vorteil, dass das Gitter- oder Netzwerk nicht an der Außenhaut 12 des Schiffrumpfes 10 angebracht zu werden braucht, sondern in Verbindung mit den Untersuchungs- bzw. Bestimmungsmitteln eingesetzt werden kann. So kann das Gitter- oder Netzwerk in Verbindung z. B. mit Messstrahlen oder in Beobachtungsoptik eingesetzt und verwendet werden.

### Bezugszeichenliste

- 100: System
- 100': System

- 10: Schiffsrumpf
- 12: Außenhaut oder Schiffshaut des Schiffsrumpfes 10
- 14: sichtbares oder unsichtbares Gitter- oder Netzwerk auf Außenhaut des Schiffsrumpfes 10
- 16: durch Gitter- oder Netzwerk 14 gebildete Einheit, z. B. Planquadrat(feld) oder Planrechteck(feld), auf Außenhaut des Schiffsrumpfes 10
- 18: Ordnungsmittel oder Zuordnungsmittel, z. B. abtastbarer Buchstabe und/oder abtastbare Zahl

- 20: schwimm-/tauchfähige Untersuchungs-/Bestimmungseinheit, insbesondere Unterwasserfahrzeug,
- 20': schwimm-/tauchfähige Untersuchungs-/Bestimmungseinheit
- 22: z. B. auf Radar und/oder z. B. auf Ultraschall basierende Untersuchungs-/Bestimmungsmittel der Untersuchungs/Bestimmungseinheit 20, 20'
- 24: Erfassungs-/Messstrahl der Untersuchungs-/Bestimmungsmittel 22
- 26: mobile Aufhängeeinrichtung, insbesondere verfahrbare Stange
- 28: Seil der Aufhängeeinrichtung 26

- DP: Doppelpfeil

## Patentansprüche

1. System (100; 100') zum Untersuchen und/oder zum Bestimmen der Beschaffenheit oder des Zustandes eines Schiffsrumpfes (10), insbesondere dessen Außenhaut (12), mittels mindestens eines Gitter- oder Netzwerkes (14), das eine Unterteilung aufweist, die funktional mit mindestens einer schwimm-/tauchfähigen Untersuchungs-/Bestimmungs-/Messeinheit (20; 20') zum Untersuchen und/oder zum Bestimmen der Beschaffenheit oder des Zustandes des Schiffsrumpfes (10) zusammenwirkt.

2. System (100; 100') zum Untersuchen und/oder zum Bestimmen der Beschaffenheit oder des Zustandes eines Schiffsrumpfes (10), insbesondere dessen Außenhaut (12) nach Anspruch 1, wobei das System ein Gitter- oder Netzwerk (14) mit einer planquadratischen Unterteilung (16') oder mit einzelnen Einheiten (16) umfasst, das funktional mit mindestens einer schwimm-/tauchfähigen Untersuchungs-/Bestimmungs-/Messeinheit (20, 20') zum Untersuchen und/oder zum Bestimmen der Beschaffenheit oder des Zustandes der Außenhaut (12) des Schiffsrumpfes (10) zusammenwirkt.

3. System nach Anspruch 1 oder 2,
**dadurch gekennzeichnet,**
**dass** das Gitter- oder Netzwerk (14) in einzelne Einheiten (16) unterteilt ist, die als gleichförmige, quadratische, rechteckförmige oder eine andere geometrische Form aufweisende Flächengestaltungen ausgebildet sind.

4. System nach einem der vorhergehenden Ansprüche 1 bis 3,
**dadurch gekennzeichnet,**
**dass** die Einheiten (16) mit mindestens einem Ordnungsmittel oder Zuordnungsmittel (18), wie Buchstaben, Zahlen oder Buchstaben-/Zahlenkombinationen, versehen sind.

5. System nach einem der vorhergehenden Ansprüche 1 bis 4,
**dadurch gekennzeichnet,**
**dass** das Gitter- oder Netzwerk (14) mit seinen einzelnen Einheiten (16) und mit den Ordnungsmitteln oder Zuordnungsmitteln (18) vermittels der Untersuchungs-/Bestimmungseinheit (20; 20') abtastbar, optisch erkennbar, oder elektronisch erfassbar und in Messwerte umwandelbar ist.

6. System nach einem der vorhergehenden Ansprüche 1 bis 5,
**dadurch gekennzeichnet,**
**dass** die Außenhaut (12) des Schiffsrumpfes (10) mit dem Gitter-oder Netzwerk (14) versehen ist.

7. System nach Anspruch 6,
**dadurch gekennzeichnet,**
**dass** die Unterteilung der Außenhaut (12)
- durch Farbanbringung oder
- durch, insbesondere unter der Farbe der Außenhaut (12) angebrachte ortbare Farbstreifen
realisiert ist.

8. System nach einem der vorhergehenden Ansprüche 1 bis 4,
**dadurch gekennzeichnet,**
**dass** das Gitter- oder Netzwerk (14) in einer Messoptik der Untersuchungs-/Bestimmungs-/Messeinheit (20, 20') angeordnet ist.

9. System nach einem der vorhergehenden Ansprüche 1 bis 5,
**dadurch gekennzeichnet,**
**dass** das Gitter- oder Netzwerk (14) visuell zwischen dem Schiffsrumpf (10) und der Untersuchungs-/Bestimmungs-/Messeinheit (20; 20') aufgebaut wird.

10. System nach Anspruch 9,
**dadurch gekennzeichnet,**
**dass** das Gitter- oder Netzwerk (14) in den von der Untersuchungs/Bestimmungs-/Messeinheit (20; 20') auf den Schiffsrumpf (10) gesandten Messstrahl eingeblendet wird.

11. System nach einem der vorhergehenden Ansprüche 1 bis 10,
**dadurch gekennzeichnet,**
**dass** die Untersuchungs-/Bestimmungs-/Messeinheiteinheit (20 bzw. 20')
- als bemanntes und/oder funk- oder manuell steuerbares Unterwasserfahrzeug, insbesondere Unterseeboot, ausgebildet bzw.
- entlang dem zu untersuchenden Schiffsrumpf (10) und/oder beabstandet, insbesondere gleichmäßig beabstandet, zum zu untersuchenden Schiffsrumpf (10) verfahrbar
ist.

12. System nach einem der vorhergehenden Ansprüche 1 bis 11,
**dadurch gekennzeichnet,**
**dass** die Untersuchungs-/Bestimmungs-/Messeinheit (20; 20') mit Untersuchungs-/Bestimmungsmitteln (22) oder Messeinrichtungen zum Untersuchen und/oder zum Bestimmen, insbesondere zum Messen, z. B. zum lichtoptischen, photographischen oder visuellen Erfassen, der Beschaffenheit oder des Zustandes, z. B. der Farbschichtdicke und/oder der Rauheit, des Schiffsrumpfes (10), insbesondere der Oberfläche der Außenhaut (12) des Schiffsrumpfes (10), versehen ist.

13. System gemäß Anspruch 12,
**dadurch gekennzeichnet,**
**dass** die Untersuchungs-/Bestimmungsmittel (22) oder Messeinrichtungen
- als mindestens eine Einrichtung zum Orten der einzelnen Einheiten (16) am Schiffsrumpf und/oder
- als mindestens eine Einrichtung zum Abtasten der Oberfläche der Außenhaut (12) in den einzelnen Einheiten (16) und/oder
- als mindestens eine Einrichtung zum Messen der Farbschichtdicke auf der Außenhaut (12) und/oder der Rauheit der Außenhaut (12)
ausgebildet sind.

14. Verfahren zum Untersuchen und/oder zum Bestimmen der Beschaffenheit oder des Zustandes eines Schiffsrumpfes (10) bzw. dessen Außenhaut (12), insbesondere mittels mindestens eines Gitter- oder Netzwerkes (14), das mit einer Unterteilung versehen wird, wobei die Unterteilung funktional mit mindestens einer schwimm-/tauchfähigen Untersuchungs-/Bestimmungs-/Messeinheit (20; 20') zum Untersuchen und/oder zum Bestimmen der Beschaffenheit oder des Zustandes des Schiffsrumpfes (10) bzw. dessen Außenhaut (12) zusammenwirkt.

15. Verfahren zum Untersuchen und/oder zum Bestimmen der Beschaffenheit oder des Zustandes eines Schiffsrumpfes (10) bzw. dessen Außenhaut (12),
**dadurch gekennzeichnet,**
**dass** von einem parallel zu dem zu prüfenden Schiffes verfahrbare schwimm-/tauchfähige Untersuchungs-/Bestimmungs-/Messeinheit (20, 20') auf die Außenhaut (12) des Schiffsrumpfes (10) ein sich abschnittsweise oder gänzlich über die Schiffsaußenhaut erstreckendes visuelles Gitter- oder Netzwerk (14) mit einer planquadratischen Unterteilung (16') oder einzelnen Einheiten (16) mit Ordnungsmitteln oder Zuordnungsmitteln (18) in Form von Buchstaben, Zahlen oder von Buchstaben-/Zahlenkombinationen als bildliche Präsentation und Sichtbarmachung aufgebaut und auf die Außenkante (12) gerichtet wird, so dass die einzelnen Unterteilungen (16') oder Einheiten (16) entsprechenden Flächen oder Abschnitten der Außenhaut (12) zugeordnet werden, über die die Beschaffenheit oder der Zustand des Schiffsrumpfes (10) oder dessen Außenhaut (12) durch lichtoptisches, photographisches oder visuelles Erfassen überprüft wird.

16. Verfahren nach einem der Ansprüche 14 oder 15,
**dadurch gekennzeichnet,**
**dass** mittels der Untersuchungs-/Bestimmungs-/Messeinheit (20; 20') erhaltene Messwerte ausgewertet werden und/oder mit diesen Messwerten der Zeitpunkt errechnet wird, zu dem das Schiff zum Zwecke des Anstriches, der Inspektion, der Reparatur, der Überholung, der Wartung o. dgl. in ein Dock, insbesondere in ein Trockendock, zu verbringen ist.

17. Verwendung mindestens einer schwimm-/tauchfähigen Untersuchungs-/Bestimmungs-/Messeinheit (20; 20') zum Untersuchen und/oder zum Bestimmen der Beschaffenheit oder des Zustandes eines Schiffsrumpfes (10) bzw. dessen Außenhaut (12), insbesondere mittels mindestens eines Gitter- oder Netzwerkes (14), mit Unterteilung in, z. B. gleichförmige, Einheiten (16) mit Ordnungsmitteln oder Zuordnungsmitteln (18) in Form von Buchstaben, Zahlen oder von Buchstaben-/Zahlenkombinationen aufweist.
